# EUROPEAN PATENT APPLICATION

(11) **EP 4 776 337 A1**
(43) Date of publication of application: **15.07.2026**
(21) Application number: 25223836.5
(22) Date of filing: 16.12.2025
(51) Int. Cl.: H01M 4/131, H01M 4/04, H01M 4/62, H01M 4/66, H01M 10/54

(54) **POSITIVE PLATE, AND METHOD FOR PRODUCING, ELECTRODE MATERIAL**

(30) Priority: 09.01.2025 JP 2025003385
(71) Applicant: Prime Planet Energy & Solutions, Inc., Chuo-ku, Tokyo 103-0022 (JP)
(72) Inventor: SATO, Hiroki, Tokyo,, 103-0022 (JP)
(74) Representative: Kuhnen & Wacker Patent- und Rechtsanwaltsbüro PartG mbB

(57) **Abstract**

The present disclosure provides a positive plate, and a method for collecting positive electrode materials included in the positive plate.

The positive plate disclosed herein includes an electrode sheet and a positive electrode mixture layer containing a positive electrode active material, in which a water-soluble adhesive layer containing a water-soluble binder and a conductive material is interposed between the electrode sheet and the positive electrode mixture layer.

## Description

### BACKGROUND

### 1. Technical Field

The present disclosure relates to a positive plate, and a method for producing electrode materials.

### 2. Background

In recent years, due to environmental concerns, reproduction (recycling) of valuable metals such as Li, Ni, and Co from positive electrode active materials of secondary batteries has been promoted.

For reproducing valuable metals from positive electrode active materials, a positive electrode mixture layer is peeled off from an electrode sheet to collect the valuable metals from the positive electrode mixture layer. However, since general positive electrode mixture layers contain binders such as polyvinylidene fluoride (PVdF), it is difficult to peel a positive electrode mixture layer from an electrode sheet. For this reason, it has been proposed to dissolve a binder in a solvent for separating a positive electrode mixture layer from an electrode sheet (e.g. Patent Literature 1 (Japanese Patent Application Laid-Open No. H10-255862)).

### SUMMARY

However, solvents capable of dissolving binders in a positive electrode mixture layer have problems such as significant environmental load and difficulty in disposal. Also, the solvents have a problem that, if the solvent is not sufficiently impregnated into the mixture layer, a collecting ratio of a positive electrode mixture decreases due to insufficient peeling.

The present disclosure has been created in terms of the above circumstances, and an object of the present disclosure is to provide a technology that facilitates peeling of a positive electrode mixture layer from an electrode sheet using a solvent with low environmental load.

The positive plate disclosed herein includes an electrode sheet, and a positive electrode mixture layer applied onto the electrode sheet, where a water-soluble adhesive layer containing a water-soluble binder and a conductive material is interposed between the electrode sheet and the positive electrode mixture layer.

The positive plate having the above configuration includes the water-soluble adhesive layer interposed between the electrode sheet and the positive electrode mixture layer. Since this water-soluble adhesive layer contains a water-soluble binder, the water-soluble adhesive layer can be easily dissolved in an aqueous solvent. The dissolution of the water-soluble adhesive layer initiates peeling of the positive electrode mixture layer from the electrode sheet. Furthermore, for this positive plate, an aqueous solvent can be used as the solvent for the peeling. As described above, the positive plate disclosed herein can facilitate peeling of the positive electrode mixture layer from the electrode sheet using a solvent with low environmental load.

### BRIEF DESCRIPTION OF THE DRAWINGS

FIG. 1 is a schematic sectional view of a positive plate according to an embodiment.
FIG. 2 is a schematic diagram showing a method for producing electrode materials according to an embodiment.
FIG. 3 is a schematic diagram showing an aspect of a peeling step in the method for producing the electrode materials according to an embodiment.
FIG. 4 is a schematic diagram showing an aspect of a collecting step in the method for producing the electrode materials according to an embodiment.

### DETAILED DESCRIPTION

Some embodiments of the technology disclosed herein will be explained below with reference to the drawings. In the following drawings, members and parts that exhibits the same functions are marked with the same symbols for explanation. In each drawing, the dimensional relationships (length, width, thickness, etc.) do not necessarily reflect the actual dimensional relationships. Note that matters not especially mentioned herein but necessary for implementing the technology disclosed herein (e.g. a general configuration and production process of a power storage device, which does not characterize the present disclosure) may be understood as matters designed by those skilled in the art based on the prior art in the field. The technology disclosed herein may be implemented based on the content disclosed herein and the common technical knowledge in the field. Furthermore, the following description is not intended to limit the present disclosure to the following configurations.

In this specification, the notation "A to B" indicating a range means "A or more and B or less", and also includes the meanings "more than A" and "less than B". Furthermore, in this specification, the term "power storage device" refers to a device capable of charging and discharging. The power storage device includes batteries such as primary batteries and secondary batteries (e.g. nonaqueous electrolyte secondary batteries such as lithium-ion secondary batteries, nickel-metal hydride batteries), and capacitors (physical batteries) such as electric double-layer capacitors.

### 1. Positive Plate

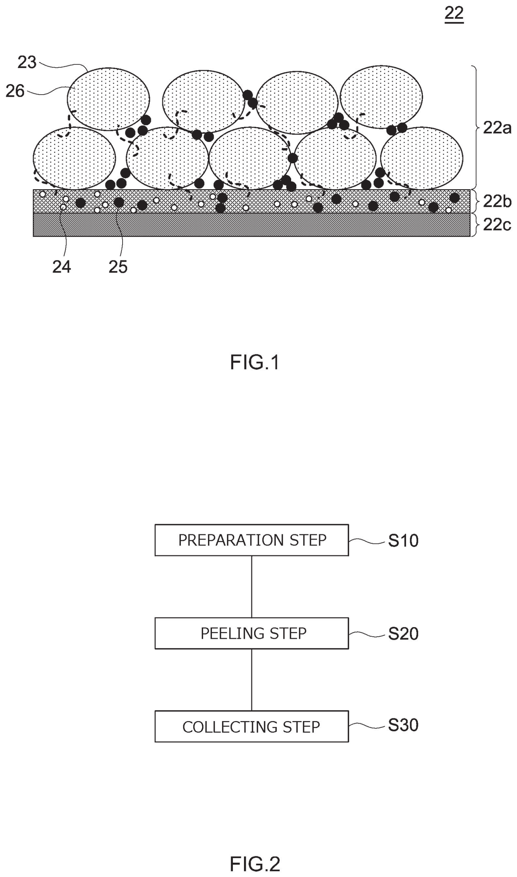

As shown in FIG. 1, a positive plate 22 includes an electrode sheet 22c and a positive electrode mixture layer 22a applied onto the electrode sheet 22c. A water-soluble adhesive layer 22b containing a water-soluble binder 24 and a conductive material 25 is interposed between the electrode sheet 22c and the positive electrode mixture layer 22a. This positive plate 22 can facilitate peeling of the positive electrode mixture layer 22a from the electrode sheet 22c using a solvent with low environmental load. The positive plate will be explained below in detail.

### (1) Electrode sheet

The electrode sheet 22c is a belt-shaped conductive member. The electrode sheet 22c should be made of a conductive metal such as aluminum, an aluminum alloy, nickel, and stainless steel. Preferable examples of the electrode sheet 22c include aluminum foils.

An average thickness of the electrode sheet 22c is not particularly limited. For example, the average thickness is preferably 2 µm to 30 µm, more preferably 2 µm to 20 µm, even more preferably 5 µm to 15 µm.

### (2) Positive electrode mixture layer

The positive electrode mixture layer 22a is a thin layer applied onto the electrode sheet 22c. The positive electrode mixture layer 22a may be formed on one side or both sides of the electrode sheet 22c. The positive electrode mixture layer 22a contains a positive electrode active material 23. The positive electrode active material 23 is a material capable of reversibly storing and releasing charge carriers. This positive electrode active material 23 contains at least one valuable metal of Li, Ni, Co, and Mn. Examples of the positive electrode active material 23 include LiCoO₂, LiNiO₂, LiFeO₂, LiNi_{1/3}Co_{1/3}Mn_{1/3}O₂ (NCM), LiNi_{0.5}Mn_{1.5}O₄, LiNi_{0.8}Co_{0.15}Al_{0.05}O₂ (NCA), LiCrMO₄, LiMn₂O₄, and LiFePO₄ (LFP). Each of these positive electrode active materials 23 may be used alone or in combination of two or more types.

Preferably, the positive electrode mixture layer 22a contains a water-insoluble binder. In this specification, the water-insoluble binder refers to a binder that has a water solubility of 3.0/100 g or lower under 1 atm at 23°C. The water-insoluble binder solubility can suppress peeling of the positive electrode mixture layer 22a from the electrode sheet 22c. On the other hand, the positive electrode mixture layer 22a containing the water-insoluble binder is difficult to peel off from the electrode sheet 22c, resulting in decrease in valuable metal reproduction efficiency. However, according to the technology disclosed herein, the water-soluble adhesive layer 22b described later serves as a starting point for peeling, and therefore the positive electrode mixture layer 22a containing a water-insoluble binder can be easily peeled off. Examples of the water-insoluble binder include polyvinylidene fluoride (PVdF), polytetrafluoroethylene (PTFE), and styrene-butadiene rubber (SBR).

The positive electrode mixture layer 22a may contain optional components other than the positive electrode active material 23 and the water-insoluble binder. The optional components can be exemplified by the conductive material 25. As the conductive material 25, for example, a carbon material such as acetylene black (AB) may be used. Examples of the conductive material 25 include carbon black such as acetylene black (AB), carbon nanotube such as single-walled carbon nanotube (SWCNT), double-walled carbon nanotube (DWCNT), and multi-walled carbon nanotube (MWCNT), as well as carbon fibers. Above all, acetylene black or carbon nanotube is suitable.

The composition of the positive electrode mixture layer 22a can be modified as appropriate depending on a type of a desired secondary battery. For example, the positive electrode active material 23 may account for generally 80 mass% or more, typically 90 mass% or more, for example 95 mass% or more, based on 100 mass% of the total solid content of the positive electrode mixture layer 22a. On the other hand, from the viewpoint of sufficiently ensuring the content of other components (water-insoluble binder, conductive material 25, etc.), the content of the positive electrode active material 23 is preferably 99.8 mass% or less, preferably 99.5 mass% or less, preferably 99 mass% or less, or preferably 98 mass% or less.

### (3) Water-soluble adhesive layer

The water-soluble adhesive layer 22b is a layer interposed between the electrode sheet 22c and the positive electrode mixture layer 22a. This water-soluble adhesive layer 22b contains the water-soluble binder 24 and the conductive material 25. This water-soluble adhesive layer 22b bonds the electrode sheet 22c with the positive electrode mixture layer 22a via the water-soluble binder 24. Furthermore, since the water-soluble adhesive layer 22b contains the conductive material 25, a conductive path can be formed between the electrode sheet 22c and the positive electrode mixture layer 22a. This water-soluble adhesive layer 22b can be easily dissolved by feeding an aqueous solvent. Thereby, the water-soluble adhesive layer 22b serves as the starting point for peeling, and therefore the positive electrode mixture layer 22a can be easily peeled off from the electrode sheet 22c. As a result, the positive plate 22 according to this embodiment can be configured such that the positive electrode mixture layer 22a is easily peeled from the electrode sheet 22c even when using a solvent with low environmental load. The water-soluble adhesive layer 22b will be explained below in detail.

In this specification, the water-soluble binder refers to a binder that has a water solubility of 17.0/100 g or higher under 1 atm at 23°C. For example, the water-soluble binder 24 is preferably based on polyacrylamide. The polyacrylamide-based binder according to the present disclosure refers to a water-soluble polymer containing 50 mass% or more of repeating units derived from (meth)acrylamide, based on 100 parts by mass of the total repeating units. The water-soluble polymer may contain not only the repeating units derived from (meth)acrylamide but also repeating units derived from other monomers copolymerizable with the repeating units derived from (meth)acrylamide. Examples of other monomers include acids having polymerizable unsaturated double bonds, unsaturated carboxylic acid esters, α,β-unsaturated nitrile compounds, conjugated diene compounds, and aromatic vinyl compounds.

Examples of polyacrylamide-based water-soluble binders include polyacrylamide, polymethacrylamide, poly(N-isopropylacrylamide), poly(N,N-dimethylacrylamide), poly(N,N-dimethylmethacrylamide), poly(N,N-diethylacrylamide), poly(N,N-diethylmethacrylamide), poly(N,N-dimethylaminopropylacrylamide), poly(N,N-dimethylaminopropylmethacrylamide), poly(N-methylolacrylamide), poly(N-methylolmethacrylamide), poly(diacetoneacrylamide), poly(maleic acid amide), poly(2-acrylamido-2-methylpropanesulfonate), poly(acryloylmorpholine), poly(N-phenylacrylamide), poly(N-phenylmethacrylamide), poly(N-ethyl-o-crotonotoluidide), poly(N-(4-hydroxyphenyl)acrylamide), poly(N-(4-hydroxyphenyl) methacrylamide), poly(dimethylaminopropyl(meth)acrylamide), poly(dimethylaminopropyl(meth)acrylamide methyl chloride quaternary salt), and poly(N-(3-dimethylaminopropyl)methacrylamide). Each of these polyacrylamide-based water-soluble binders may be used alone or in combination of two or more types.

The water-soluble binder 24 only needs to be any material that can be used as a binder and has a high water solubility, and is not limited to the polyacrylamide-based water-soluble binder described above. For example, the water-soluble binder 24 may be a polyacrylic-based, polyvinyl-based, polyvinylpyrrolidone-based, polyvinyl alcohol-based, or polyethylene oxide-based binder.

The content of the water-soluble binder 24 in the water-soluble adhesive layer 22b is preferably 10 mass% or more, more preferably 20 mass% or more, particularly preferably 40 mass% or more, based on 100 mass% of the total solid content of the water-soluble adhesive layer 22b. With this content, the electrode sheet 22c and the positive electrode mixture layer 22a can be suitably bonded to each other. On the other hand, when the amount of the water-soluble binder is increased, it is likely that the amount of the conductive material 25 described later is relatively decreased. Thus, the content of the water-soluble binder 24 in the water-soluble adhesive layer 22b is preferably 90 mass% or less, more preferably 80 mass% or less, particularly preferably 50 mass% or less.

As described above, the water-soluble adhesive layer 22b contains the conductive material 25 in addition to the water-soluble binder 24. Thereby, the conductivity between the electrode sheet 22c and the positive electrode mixture layer 22a can be ensured. For the conductive material 25 of the water-soluble adhesive layer 22b, any conventionally known conductive material usable for the positive electrode mixture layer 22a can be used without particular limitation. That is, examples of the conductive material 25 of the water-soluble adhesive layer 22b may include carbon black such as acetylene black (AB), carbon nanotube such as single-walled carbon nanotube (SWCNT), double-walled carbon nanotube (DWCNT), and multi-walled carbon nanotube (MWCNT), or carbon fibers. The conductive material 25 of the water-soluble adhesive layer 22b may be the same as or different from the conductive material of the positive electrode mixture layer 22a.

The amount of the conductive material 25 in the water-soluble adhesive layer 22b is preferably 10 mass% or more, more preferably 20 mass% or more, particularly preferably 50 mass% or more, based on 100 mass% of the total solid content of the water-soluble adhesive layer 22b. With this content, the performances such as power output can be suitably exhibited. On the other hand, when the amount of the conductive material 25 in the water-soluble adhesive layer 22b is increased, it is likely that the amount of the water-soluble binder 24 is relatively decreased. Thus, the amount of the conductive material 25 in the water-soluble adhesive layer 22b is preferably 90 mass% or less, more preferably 80 mass% or less, particularly preferably 60 mass% or less.

Furthermore, the water-soluble adhesive layer 22b may not be necessarily formed over the entire surface of the electrode sheet 22c. A coating area of the water-soluble adhesive layer 22b should be 60% or larger, based on 100% of the total surface area of the electrode sheet 22c. Even in this case, the effects of the technology disclosed herein can be sufficiently exerted. From the viewpoint of more suitably exerting the effects of the technology disclosed herein, the coating area of the water-soluble adhesive layer 22b is preferably 70% or larger, more preferably 85% or larger, particularly preferably 90% or larger. On the other hand, the upper limit of the coating area of the water-soluble adhesive layer 22b is not particularly limited, and the coating area may account for the entire surface (100%) of the electrode sheet 22c.

A thickness of the water-soluble adhesive layer 22b is preferably 0.5 µm or larger, more preferably 0.7 µm or larger, particularly preferably 1 µm or larger. With this thickness, the strength of the water-soluble adhesive layer 22b can be ensured, and the electrode sheet 22c and the positive electrode mixture layer 22a can be sufficiently bonded to each other. On the other hand, the thickness of the water-soluble adhesive layer 22b is preferably 3 µm or smaller, more preferably 2.5 µm or smaller, particularly preferably 2 µm or smaller. As the water-soluble adhesive layer 22b becomes thinner, the water-soluble adhesive layer 22b can be more easily dissolved by water feeding, and thereby the positive electrode mixture layer 22a can be more easily peeled from the electrode sheet 22c.

### 2. Method for producing electrode material

Next, a method for reproducing electrode materials using the technology disclosed herein (hereinafter referred to as "method for producing electrode materials") will be explained. As shown in FIG. 2, the method for producing the electrode material according to this embodiment includes: preparation step S10 of preparing the positive plate 22 having the above-described configuration; peeling step S20 of peeling the positive electrode mixture layer 22a via the water-soluble adhesive layer 22b as a starting point by feeding water to the positive plate 22; and collecting step S30 of collecting electrode materials from the positive electrode mixture layer 22a. Each step will be explained below.

### (1) PREPARATION STEP S10

In preparation step S 10, the positive plate 22 is prepared as a material from which electrode materials are collected. The positive plate 22 prepared herein is the positive plate having the above-described configuration. To avoid overlapped description, the detailed explanation for the configuration of the positive plate 22 is omitted. Note that the means for preparing the positive plate 22 is not particularly limited. The positive plate 22 may be collected from disassembled used secondary batteries, or may be defective products or process scraps discarded during production of secondary batteries.

### (2) PEELING STEP S20

In peeling step S20, the positive electrode mixture layer 22a is peeled from the electrode sheet 22c. As described above, in the positive plate 22 according to this embodiment, the electrode sheet 22c and the positive electrode mixture layer 22a are bonded to each other via the water-soluble adhesive layer 22b. Thereby, when the water-soluble adhesive layer 22b is dissolved in an aqueous solvent, the positive electrode mixture layer 22a can be easily peeled via the water-soluble adhesive layer 22b as a starting point.

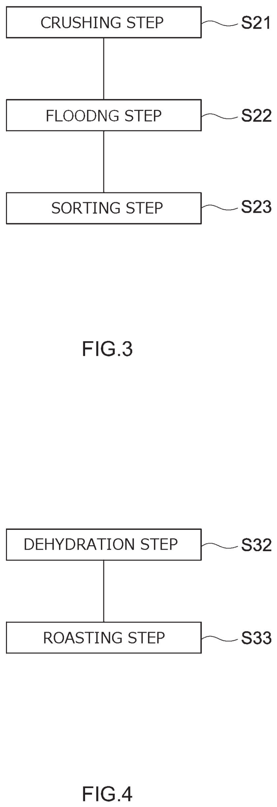

It is preferable that peeling step S20 includes crushing step S21, flooding step S22, and sorting step S23, as shown in FIG. 3. Thereby, the positive electrode mixture layer 22a can be efficiently peeled from the electrode sheet 22c.

### (2-1) CRUSHING STEP S21

Specifically, in crushing step S21, the positive plate 22 collected in preparation step S10 is crushed. Thereby, an flooding efficiency in flooding step S22 described later can be improved. The means for crushing the positive plate 22 is not particularly limited, and any conventionally known crushing means may be adopted.

### (2-2) FLOODING STEP S22

In flooding step S22, the crushed positive plate 22 is flooded in an aqueous solvent. Thereby, the water-soluble adhesive layer 22b is dissolved in the aqueous solvent, so that the positive electrode mixture layer 22a can be easily peeled off from the electrode sheet 22c. The "aqueous solvent" used in this step refers to a liquid medium predominantly containing water. Examples of the aqueous medium include water such as distilled water, ion-exchanged water, pure water, and ultrapure water. The aqueous medium may contain components other than water, as long as the effects of the technology disclosed herein (Li elution from the positive electrode active material) are not significantly inhibited. For example, a mixture of water and an organic solvent soluble in that water (e.g. an alcohol such as ethanol) can be used as the aqueous medium. Considering the dissolution efficiency of the water-soluble adhesive layer 22b, it is preferable that the content of the organic solvent in the aqueous medium is small. For example, the content of the organic solvent based on the total weight of the aqueous medium (100 wt%) is preferably 8.0 wt% or less, more preferably 2.0 wt% or less, even more preferably 0.1 wt% or less, particularly preferably 0.05 wt% or less.

Furthermore, in this step, it is preferable to stir the positive plate 22 and the aqueous solvent. Thereby, the peeling efficiency of the positive electrode mixture layer 22a can be improved. The stirring means is not particularly limited, and any conventionally known stirring means may be used. The rotation frequency for the stirring is preferably 500 to 2000 rpm. This rotation frequency can further improve the peeling efficiency. Furthermore, the temperature of the aqueous solvent during the stirring is preferably 100°C or lower (more preferably 20°C to 40°C).

### (2-3) SORTING STEP S23

In sorting step S23, the aqueous solvent after flooding step S22 is passed through a sieve having a predetermined mesh size. The mesh of the sieve in this step is sized so as to allow the separated positive electrode mixture layer 22a to pass through but capture the electrode sheet 22c. This size can facilitate the sorting between the electrode sheet 22c and the positive electrode mixture layer 22a. It is preferable that the specific mesh size of the sieve is adjusted as appropriate depending on the conditions of crushing step S21 and the stirring step described above.

### (3) COLLECTING STEP S30

In collecting step S30, electrode materials are collected from the positive electrode mixture layer 22a. A specific collecting means for this step is not particularly limited, and any conventionally known collecting method can be adopted without particular limitation. For example, collecting step S30 preferably includes dehydration step S31 and roasting step S32, as shown in FIG. 4.

### (3-1) DEHYDRATION STEP S31

In dehydration step S31, the positive electrode mixture layer 22a collected in peeling step S20 is dehydrated. Thereby, effects of suppressing generation of carbon dioxide derived from the water-soluble binder and reducing energy consumption during the roasting can be exhibited by removing the water-soluble binder components. The specific method for this step is not particularly limited, and any conventionally known dehydration method may be adopted without particular limitation. As the dehydration method, for example, a filter press may be used.

### (3-2) ROASTING STEP S32

In roasting step S32, the dehydrated positive electrode mixture layer 22a is roasted. Thereby, the binder, the conductive material, water, and the like in the positive electrode mixture layer 22a can be removed. As a result, electrode materials (valuable metals such as Li, Ni, Co, and Mn) can be reproduced from the positive plate 22 from which electrode materials are collected. Preferably, the roasting temperature and roasting time are adjusted as appropriate depending on the composition of the positive electrode mixture layer 22a. For example, the roasting temperature is preferably 400 to 600°C. The roasting time is preferably 24 to 48 hours.

Furthermore, the roasted electrode materials contain impurities such as Al, Al₂O₃, and Al(OH)O in some cases. The sizes of the impurities are about 700 µm. On the other hand, the sizes of the roasted valuable metals are about 150 µm. Thus, it is preferable that the electrode materials are passed through a sieve having a mesh size of about 300 µm. Thereby, valuable metals with higher purities can be collected (reproduced).

### <<Evaluation>>

### 1. Test Examples

Test examples related to the technology disclosed herein will be explained below, but the technology disclosed herein is not intended to be limited to these test examples.

### Examples 1 to 9

### [Preparation of Positive Plate]

In Examples 1 to 9, first, a paste for forming a water-soluble adhesive layer was prepared. Specifically, a water-soluble binder (polyacrylamide), a conductive material (acetylene black), and an aqueous medium (pure water) were mixed to prepare a paste for forming a water-soluble adhesive layer. Composition ratios of the water-soluble binder and the conductive material were varied among Examples 1 to 9, as presented in Table 1.

Next, a paste for forming the positive electrode mixture layer was prepared. A lithium-nickel-cobalt-manganese composite oxide (NCM) as the positive electrode active material, polyvinylidene fluoride (PVdF) as the binder, acetylene black (AB) as the conductive material, and N-methyl-2-pyrrolidone (NMP) were mixed to prepare the paste for forming the positive electrode mixture layer. The mixing ratio of the positive electrode active material, binder, and the conductive material was set to 97.5:1.5:1.

Subsequently, the paste for forming the water-soluble adhesive layer was applied onto an electrode sheet (aluminum sheet, 12 µm). The paste was dried to form a water-soluble adhesive layer having a thickness of 120 µm on the surface of the electrode sheet. Then, the paste for forming the positive electrode mixture layer was applied onto the surface of the water-soluble adhesive layer so that the paste had a thickness of 120 µm. The paste for forming the positive electrode mixture layer was dried to form the positive electrode mixture layer. Then, the positive electrode mixture layer was rolled by a press working and processed so as to have a predetermined size, to obtain a positive plate.

### (2) Comparative Example 1

In Comparative Example 1, a positive plate was prepared under the same condition as in Examples 1 to 9, except that no water-soluble binder was added to the layer between the electrode sheet and the positive electrode mixture layer.

### (3) Comparative Example 2

In Comparative Example 2, a positive plate was prepared under the same condition as in Examples 1 to 9, except that no conductive material was added to the layer between the electrode sheet and the positive electrode mixture layer.

### (4) Comparative Example 3

In Comparative Example 3, a positive plate was prepared under the same condition as in Examples 1 to 9 and Comparative Examples 1 and 2, except that no intermediate layer was formed between the electrode sheet and the positive electrode mixture layer.

### 2. Evaluation test

### (1) Peel strength test

In this test, the positive electrode mixture layer of the prepared positive plate was conducted to a peel strength test. A 90-degree peel strength test in accordance with JIS C 6481 (1996) was performed. The peel strength of Comparative Example 3 was defined as 100%, and a ratio of the peel strength in each example to the peel strength of Comparative Example 3 was calculated. The results are presented in Table 1.

### (2) Normal temperature output test

Subsequently, a lithium-ion secondary battery for the test was constructed using the prepared positive plate. In this test, for the negative plate, a copper electrode sheet with a surface coated with a negative electrode mixture layer was used. The negative electrode mixture layer was made of a mixture of a negative electrode active material layer (graphite) and a binder (carboxymethylcellulose (CMC), styrene-butadiene rubber (SBR)) in a ratio of 98:1:1. A mixture of ethylene carbonate (EC), dimethyl carbonate (DMC), and ethylmethyl carbonate (EMC) in a ratio of 30:30:40 was used as an electrolyte.

This test battery was charged to State of Charge (SOC) 50%, and then discharged at 150A and at 25°C for 10 seconds to measure a discharge resistance. Then, a normal-temperature output of Comparative Example 3 was defined as 100%, and a ratio of the normal-temperature output in each example to the normal-temperature output of Comparative Example 3 was calculated.

### (3) Collecting ratio of valuable metal

In this test, valuable metals were collected according to the procedure described in "2. Method for Producing Electrode Material" above. As a condition for the crushing step, the long side of the positive electrode sheet after crushing was set to 20 mm or smaller. As a condition for the flooding step, flooding was performed at 50 rpm and at 25°C for 30 minutes. As a condition for the dehydration step, suction filtration was performed at a pressure of 0.5 kPa. As a condition for the roasting step, a roasting temperature was set to 500°C and a roasting time was set to 1 hour. Then, a collecting ratio of valuable metals relative to the roasted electrode materials was measured. The "collecting ratio of valuable metals" herein is a value measured based on an inductively coupled plasma (ICP) analysis.

### [Table 1]

**Table1**

| | Water-soluble binder [wt%] | Conductive material [wt%] | Peel strength ratio [%] | Normal-temperature output ratio [%] | Post-washing recovery ratio [%] |
|---|---|---|---|---|---|
| Example 1 | 10 | 90 | 50 | 70 | 84 |
| Example 2 | 20 | 80 | 90 | 97 | 88 |
| Example 3 | 30 | 70 | 90 | 99 | 90 |
| Example 4 | 40 | 60 | 90 | 100 | 91 |
| Example 5 | 50 | 50 | 90 | 100 | 90 |
| Example 6 | 60 | 40 | 92 | 99 | 88 |
| Example 7 | 70 | 30 | 92 | 96 | 89 |
| Example 8 | 80 | 20 | 92 | 90 | 95 |
| Example 9 | 90 | 10 | 92 | 45 | 95 |
| Comparative Example 1 | 0 | 100 | 10 | 40 | 55 |
| Comparative Example 2 | 100 | 0 | 92 | 17 | 90 |
| Comparative Example 3 | 0 | 0 | 100 | 100 | 2 |

From the above results, it was confirmed that, in all of Examples 1 to 9, high levels of peel strength ratio, normal-temperature output ratio, and post-washing collecting ratio were achieved. From these results, it was found that a positive plate that can facilitate collecting of valuable metals could be obtained without significantly deteriorating battery performance by interposing the water-soluble adhesive layer containing the water-soluble binder and the conductive material between the electrode sheet and the positive electrode mixture layer.

As described above, the present disclosure has been explained in detail with reference to specific embodiments, but these embodiments are merely illustrative and do not limit the scope of claims. The technology described in claims includes variously changed and modified embodiments described above.

As described above, the present specification includes the disclosures described in the following items.

### Item 1:

A positive plate including:
an electrode sheet and
a positive electrode mixture layer applied onto the electrode sheet, in which
a water-soluble adhesive layer containing a water-soluble binder and a conductive material is interposed between the electrode sheet and the positive electrode mixture layer.

### Item 2:

The positive plate according to Item 1, in which the water-soluble binder is a polyacrylamide-based binder.

### Item 3:

The positive plate according to Item 1 or 2, in which a content of the water-soluble binder is 20 to 70 wt%.

### Item 4:

The positive plate according to any one of Items 1 to 3, in which the conductive material is acetylene black or carbon nanotube.

### Item 5:

The positive plate according to any one of Items 1 to 4, in which the water-soluble adhesive layer has a thickness of 0.5 to 3 µm.

### Item 6:

The positive plate according to any one of Items 1 to 5, in which the positive electrode mixture layer contains a water-insoluble binder.

### Item 7:

A method for producing electrode materials, including:
a step of preparing a positive plate according to any one of items 1 to 6;
a step of peeling the positive electrode mixture layer via the water-soluble adhesive layer as a starting point by feeding water to the positive plate; and
a step of collecting electrode materials from the positive electrode mixture layer.

### DESCRIPTION OF REFERENCE NUMERALS

- 22: Positive plate
- 22a: Positive electrode mixture layer
- 22b: Water-soluble adhesive layer
- 22c: Electrode sheet
- 23: Positive electrode active material
- 24: Water-soluble binder
- 25: Conductive material
- 26: Binder
- 27: Water

## Claims

1. A positive plate (22) comprising:
an electrode sheet (22c) and
a positive electrode mixture layer (22a) applied onto the electrode sheet(22c), wherein
a water-soluble adhesive layer (22b) containing a water-soluble binder (24) and a conductive material (25) is interposed between the electrode sheet (22c) and the positive electrode mixture layer (22a).

2. The positive plate (22) according to claim 1, wherein the water-soluble binder (24) is a polyacrylamide-based binder.

3. The positive plate (22) according to claims 1 or 2, wherein a content of the water-soluble binder (24) is 20 to 70 wt%.

4. The positive plate (22) according to any one of claims 1 to 3, wherein the conductive material (25) is acetylene black or carbon nanotube.

5. The positive plate (22) according to any one of claims 1 to 4, wherein the water-soluble adhesive layer (22b) has a thickness of 0.5 to 3 µm.

6. The positive plate (22) according to any one of claims 1 to 5, wherein the positive electrode mixture layer (22a) contains a water-insoluble binder.

7. A method for producing an electrode material, comprising:
a step of preparing a positive plate (22) according to any one of claims 1 to 6;
a step of peeling the positive electrode mixture layer (22a) via the water-soluble adhesive layer (22b) as a starting point by feeding an aqueous solvent to the positive plate (22); and
a step of collecting an electrode material from the positive electrode mixture layer (22a).
